# EUROPEAN PATENT SPECIFICATION

(11) **EP 3 088 181 B1**
(45) Date of publication and mention of the grant of the patent: **05.09.2018**
(21) Application number: 14875225.6
(22) Date of filing: 19.12.2014
(51) Int. Cl.: B32B 27/40, B05D 7/24, B32B 27/18, C08J 7/04, C09D 5/00, C09D 175/04, B32B 7/12, B32B 27/16, B32B 27/26, B32B 27/30

(54) **MULTILAYERED FILM AND METHOD FOR MANUFACTURING SAME**
MEHRSCHICHTIGE FOLIE UND VERFAHREN ZUR HERSTELLUNG DAVON
FEUILLE MULTICOUCHE ET SON PROCÉDÉ DE FABRICATION

(30) Priority: 26.12.2013 JP 2013270289
(43) Date of publication of application: 02.11.2016
(73) Proprietor: Zeon Corporation, Tokyo 100-8246 (JP)
(72) Inventor: SHU, Hiroaki, Tokyo 100-8246 (JP)
(74) Representative: Maiwald Patent- und Rechtsanwaltsgesellschaft mbH
(86) International application number: PCT/JP2014/083702
(87) International publication number: WO 2015/098750

(56) References cited:
- JP-A- 2010 176 022
- JP-A- 2012 079 438
- JP-A- 2012 128 097
- JP-A- 2012 159 666
- JP-A- 2015 024 511
- DATABASE WPI Week 201257 Thomson Scientific, London, GB; AN 2012-L00585 XP002771905, & JP 2012 159666 A (NIPPON ZEON KK) 23 August 2012 (2012-08-23)
- DATABASE WPI Week 201246 Thomson Scientific, London, GB; AN 2012-H68338 XP002771906, & JP 2012 128097 A (NIPPON ZEON KK) 5 July 2012 (2012-07-05)
- DATABASE WPI Week 201232 Thomson Scientific, London, GB; AN 2012-E43453 XP002771907, & JP 2012 079438 A (NIPPON ZEON KK) 19 April 2012 (2012-04-19)
- DATABASE WPI Week 201057 Thomson Scientific, London, GB; AN 2010-K50580 XP002771908, & JP 2010 176022 A (NIPPON ZEON KK) 12 August 2010 (2010-08-12)
- DKS: "Superflex - Water-dispersed polyurethanes", , XP002771909, Retrieved from the Internet: URL:www.dks-web.jp/download/img/catadata/s uperflex.pdf [retrieved on 2017-07-11]

## Description

### Field

The present invention relates to a multi-layer film and a method for producing the same.

### Background

In a variety of image display devices such as liquid crystal display devices, organic EL display devices, and plasma displays, a variety of optical films are used. The optical films are often used by, e.g., being laminated to any members having a variety of functions such as polarizers, hard coat layers, antireflection layers, antistatic layers, antiglare layers, and antifouling layers. The optical films are thus required to have high adhesive strength to the members to be laminated.

Some optical films, however, do not have high adhesiveness. The surface of such an optical film may be provided with a layer that can enhance the adhesiveness of the optical film. This layer is referred to as an "adhesion facilitating layer". The adhesion facilitating layer is a layer having a function of reinforcing the adhesive strength of the film so as to achieve stronger adhesion to a member when the film having the adhesion facilitating layer is laminated to the member with, if necessary, an adhesive interposed therebetween. As the adhesion facilitating layer, there has been proposed those formed with a urethane resin (refer to Patent Literature 1 and Patent literature 2).

### Citation List

### Patent Literature

Patent Literature 1: Japanese Patent Application Laid-open No. 2009-274390 A. Patent Literature 2: Japanese Patent Application Laid-open No. 2012-159666 A.

### Summary

### Technical Problem

In recent years, the adhesion facilitating layer is required to have still higher adhesiveness. The conventional adhesion facilitating layers may lose adhesiveness when exposed for a long period of time under a high humidity environment. The adhesion facilitating layer is thus required to be capable of retaining the adhesiveness for a long period of time even under the high humidity environment.

The present invention is invented in view of the aforementioned problem, and the objective thereof is to provide a multi-layer film that includes an adhesion facilitating layer having excellent adhesiveness and being capable of retaining the adhesiveness for a long period of time under a high humidity environment, and a method for producing the multi-layer film.

### Solution to Problem

As a result of intensive studies to solve the aforementioned problem, the inventor found out that a multi-layer film including a substrate film and an adhesion facilitating layer provided on the substrate film has excellent adhesiveness and is capable of retaining the adhesiveness for a long period of time under a high humidity environment, the adhesion facilitating layer being a cured product of a composition containing a polyurethane, a crosslinking agent, and a nonvolatile base, a tensile elastic modulus of the polyurethane being in a certain range. The present invention present invention was thus completed.

That is, the present invention is as follows.
(1) A multi-layer film, comprising:
   a substrate film; and an adhesion facilitating layer provided on the substrate film, wherein
   the adhesion facilitating layer is a cured product of a composition that contains a polyether-based
   polyurethane, a crosslinking agent capable of crosslinking the polyether-based polyurethane, and a nonvolatile base, and
   the polyether-based polyurethane has a tensile elastic modulus of equal to or larger than 1,000 N/mm² and equal to or smaller than 5,000 N/mm².
(2) The multi-layer film according to (1), wherein the substrate film includes a layer made of a resin containing a polymer having an alicyclic structure.
(3) The multi-layer film according to (1) or (2), wherein the crosslinking agent contains an epoxy compound.
(4) The multi-layer film according to any one of (1) to (3), wherein the composition contains particles.
(5) The multi-layer film according to any one of (1) to (4), wherein the composition contains a wetting agent.
(6) A method for producing a multi-layer film, the method comprising:
   forming on a substrate film a film of a composition that contains a polyether-based polyurethane, a crosslinking agent capable of crosslinking the polyether-based polyurethane, and a nonvolatile base; and
   curing the film of the composition, wherein
   the polyether-based polyurethane has a tensile elastic modulus of equal to or larger than 1,000 N/mm² and equal to or smaller than 5,000 N/mm².

### Advantageous Effects of Invention

The present invention can provide a multi-layer film that includes an adhesion facilitating layer having excellent adhesiveness and being capable of retaining the adhesiveness for a long period of time under a high humidity environment, and a method for producing the multi-layer film.

### Description of Embodiment

The present invention will now be explained in detail referring to embodiments and examples. The present invention is however not limited to the following embodiments and examples, and may be implemented with any modification without departing from the scope of the present claims and equivalents thereto.

In the following explanation, the term "(meth)acryl-" includes acryl- and methacryl-. The term "(meth)acrylate" includes acrylate and methacrylate.

In the following description, a particle diameter at which a cumulative volume calculated from a small diameter side is 50% in a particle diameter distribution measured by a laser diffraction method is employed as an average particle diameter of particles, unless otherwise stated.

In the following description, unless otherwise stated, in-plane retardation of a film or a layer is a value represented by (nx - ny) × d where nx represents a refractive index in a direction that is perpendicular to the thickness direction of the film or the layer (in-plane direction) which gives the maximum refractive index, ny represents a refractive index of the film or the layer in an in-plane direction that is perpendicular to the direction of nx, and d represents the thickness of the film or the layer. Unless otherwise stated, the wavelength for measuring the retardation is 550 nm. The retardation may be measured using a commercially available phase difference measuring device (e.g., "KOBRA-21ADH" manufactured by Oji Scientific Instruments or "WPA-micro" manufactured by Photonic Lattice) or a Senarmont method.

A "polarizing plate" includes not only a rigid member but also a member having flexibility such as a film made of resin.

### [1. Overview of multi-layer film]

The multi-layer film of the present invention includes a substrate film and an adhesion facilitating layer provided on the substrate film. The adhesion facilitating layer is a layer made of a cured product of a composition that contains a polyurethane, a crosslinking agent capable of crosslinking the polyurethane, and a nonvolatile base. The composition containing the polyurethane, the crosslinking agent, and the nonvolatile base may be appropriately referred to hereinbelow as a "urethane composition".

### [2. Substrate film]

As the substrate film, a film made of a resin is usually used. As the resin constituting the substrate film, a resin containing any polymer may be used. Among them, a thermoplastic resin is preferable and a resin containing a polymer having an alicyclic structure is particularly preferable for being used as the resin constituting the substrate film. The resin containing a polymer having an alicyclic structure is appropriately referred to hereinbelow as an "alicyclic structure containing polymer resin". The alicyclic structure containing polymer resin is superior in transparency, low moisture permeability, size stability, and lightweight property, and is thus suitable for an optical film.

The substrate film may have a single layer structure including only one layer or a multi-layer structure including two or more layers. When the substrate film has the multi-layer structure, it is preferable that one or more layers included in the substrate film are made of the alicyclic structure containing polymer resin, and it is particularly preferable that at least one outermost layer of the substrate film is made of the alicyclic structure containing polymer resin. Although the alicyclic structure containing polymer resin tends to have low adhesiveness, the low adhesiveness can be compensated by the adhesion facilitating layer. Therefore, the substrate film including the layer made of the alicyclic structure containing polymer resin can effectively take the advantage of the present invention of being capable of improving the adhesiveness.

The polymer having an alicyclic structure has an alicyclic structure in the structural unit of the polymer. Any of the polymer having the alicyclic structure in a main chain and the polymer having the alicyclic structure in a side chain may be used. As the polymer having an alicyclic structure, one type thereof may be solely used, and two or more types thereof may be used in combination at any ratio. Among them, the polymer having the alicyclic structure in the main chain is preferable from the viewpoint of, e.g., mechanical strength and heat resistance.

Examples of the alicyclic structure may include a saturated alicyclic hydrocarbon (cycloalkane) structure and an unsaturated alicyclic hydrocarbon (cycloalkene and cycloalkyne) structure. Among them, the cycloalkane structure and the cycloalkene structure are preferable and the cycloalkane structure is particularly preferable from the viewpoint of, e.g., the mechanical strength and heat resistance.

The number of carbon atoms included in the alicyclic structure is preferably four or more, more preferably five or more, preferably 30 or less, more preferably 20 or less, and particularly preferably 15 or less, per alicyclic structure. With such a structure, the mechanical strength, heat resistance, and formability of the substrate film are highly balanced, which is preferable.

The ratio of the structural unit having the alicyclic structure in the polymer having an alicyclic structure may be appropriately selected in accordance with the intended use. The ratio is preferably 55% by weight or more, more preferably 70% by weight or more, and particularly preferably 90% by weight or more. It is preferable that the ratio of the structural unit having the alicyclic structure in the polymer having an alicyclic structure is in this range from the viewpoint of transparency and heat resistance of the substrate film.

Examples of the polymer having an alicyclic structure may include a norbornene polymer, a monocyclic olefin polymer, a cyclic conjugated diene polymer, a vinyl alicyclic hydrocarbon polymer, and hydrogenated products thereof. Among them, the norbornene polymer is preferable because the norbornene polymer has good transparency and formability.

Examples of the norbornene polymer may include: a ring-opened polymer of a monomer having a norbornene structure, a ring-opened copolymer of the monomer having the norbornene structure and any monomer, and hydrogenated products thereof; and an addition polymer of a monomer having the norbornene structure, an addition copolymer of the monomer having the norbornene structure and any monomer, and hydrogenated products thereof. Among them, the hydrogenated ring-opened (co) polymer of the monomer having the norbornene structure is particularly preferable from the viewpoint of transparency, formability, heat resistance, low moisture permeability, size stability, and lightweight property. The "(co) polymer" includes both of the polymer and the copolymer.

Examples of the monomers having a norbornene structure may include bicyclo[2.2.1]hept-2-ene (common name: norbornene), tricyclo[4.3.0.1^{2,5}]deca-3,7-diene (common name: dicyclopentadiene), 7,8-benzotricyclo[4.3.0.1^{2,5}]deca-3-ene (common name: methanotetrahydrofluorene), tetracyclo[4.4.0.1^{2,5}.1^{7,10}]dodeca-3-ene (common name: tetracyclododecene), and derivatives of these components (e.g., those with a substituent in the ring). Examples of the substituent may include an alkyl group, an alkylene group, and a polar group. A plurality of the same or different substituents may be bound to the ring. As the monomer having a norbornene structure, one type thereof may be solely used, and two or more types thereof may be used in combination at any ratio.

Exemplary types of the polar group may include a heteroatom, and a group of atoms including a heteroatom. Examples of the heteroatom may include an oxygen atom, a nitrogen atom, a sulfur atom, a silicon atom, and a halogen atom. Specific examples of the polar group may include carboxy group, carbonyloxycarbonyl group, epoxy group, hydroxy group, oxy group, ester group, silanol group, silyl group, amino group, nitrile group, and sulfonic acid group.

Examples of the optional monomer capable of undergoing ring-opening copolymerization with a monomer having a norbornene structure may include a monocyclic olefin such as cyclohexene, cycloheptene, and cyclooctene and their derivatives; a cyclic conjugated diene such as cyclohexadiene and cycloheptadiene, and their derivatives. As the optional monomer capable of undergoing ring-opening copolymerization with a monomer having a norbornene structure, one type thereof may be solely used, and two or more types thereof may be used in combination at any ratio.

The ring-opening polymer of the monomer having a norbornene structure, and the ring-opening copolymer of the monomer having a norbornene structure and an optional monomer that is capable of undergoing copolymerization may be produced by polymerizing or copolymerizing the monomers in the presence of publicly known ring-opening polymerization catalyst.

Examples of the optional monomer capable of undergoing addition copolymerization with a monomer having a norbornene structure may include an α-olefin having 2 to 20 carbon atoms such as ethylene, propylene, and 1-butene, and their derivatives; a cycloolefin such as cyclobutene, cyclopentene, and cyclohexene, and their derivatives; an unconjugated diene such as 1,4-hexadiene, 4-methyl-1,4-hexadiene, and 5-methyl-1,4-hexadiene. Among those listed herein, the α-olefin is preferable, and ethylene is more preferable. As the optional monomer capable of undergoing addition copolymerization with the monomer having a norbornene structure, one type thereof may be solely used, and two or more types thereof may be used in combination at any ratio.

The addition polymer of the monomer having a norbornene structure, and the addition copolymer of the monomer having a norbornene structure and an optional monomer that is capable of undergoing copolymerization may be produced by polymerizing or copolymerizing the monomers in the presence of publicly known addition polymerization catalyst.

Examples of the monocyclic olefin polymer may include an addition polymer of a cyclic olefin monomer having a single ring such as cyclohexene, cycloheptene, or cyclooctene.

Examples of the cyclic conjugated diene polymer may include: a polymer obtained by cyclization reaction of an addition polymer of a conjugated diene monomer such as 1,3-butadiene, isoprene, or chloroprene; a 1,2 or 1,4-addition polymer of the cyclic conjugated diene monomer such as cyclopentadiene or cyclohexadiene; and hydrogenated products thereof.

Examples of the vinyl alicyclic hydrocarbon polymer may include: a polymer of a vinyl alicyclic hydrocarbon monomer such as vinyl cyclohexene and vinyl cyclohexane, and hydrogenated products thereof; a hydrogenated product obtained by hydrogenating an aromatic ring part contained in a polymer that has been obtained by polymerizing a vinyl aromatic hydrocarbon monomer such as styrene and α-methyl styrene; and a hydrogenated product of an aromatic ring of a copolymer such as a random copolymer or a block copolymer of the vinyl alicyclic hydrocarbon monomer or the vinyl aromatic hydrocarbon monomer and any monomer capable of copolymerizing with the vinyl alicyclic hydrocarbon monomer. Examples of the block copolymer may include a diblock copolymer, a triblock copolymer, or a multi-block copolymer having more blocks, and a gradient block copolymer.

The weight-average molecular weight (Mw) of the polymer contained in the resin constituting the substrate film is usually 10,000 or more, preferably 15,000 or more, and more preferably 20,000 or more, and usually 100,000 or less, preferably 80,000 or less, and more preferably 50,000 or less. The weight-average molecular weight is a weight-average molecular weight in terms of polyisoprene or polystyrene measured by gel permeation chromatography using cyclohexane as a solvent. When the sample is not dissolved with cyclohexane, toluene may be used as the solvent for the gel permeation chromatography. When the weight-average molecular weight is within the aforementioned range, mechanical strength and forming workability of the multi-layer film are highly balanced, which is preferable.

The molecular weight distribution (weight-average molecular weight (Mw)/number average molecular weight (Mn)) of the polymer contained in the resin constituting the substrate film is usually 1.2 or more, preferably 1.5 or more, and more preferably 1.8 or more, and usually 3.5 or less, preferably 3.0 or less, and more preferably 2.7 or less. By setting the molecular weight distribution to equal to or larger than the lower limit value of the aforementioned range, productivity of the polymer can be improved with cost reduction. By setting the molecular weight distribution to equal to or smaller than the upper limit value of the aforementioned range, a low-molecular weight component can be reduced, and relaxation time can thereby be extended. As a result, relaxation in exposure to high temperature can be reduced, thereby making it possible to enhance the stability of the substrate film.

The absolute value of the photoelastic coefficient C of the polymer contained in the resin constituting the substrate film is preferably 10 × 10⁻¹² Pa⁻¹ or less, more preferably 7 × 10⁻¹² Pa⁻¹ or less, and particularly preferably 4 × 10⁻¹² Pa⁻¹ or less. The photoelastic coefficient C is represented by "C = Δn/σ" where Δn is the birefringence and σ is the stress. By confining the photoelastic coefficient of the polymer within the aforementioned range, fluctuation of the in-plane retardation Re of the substrate film can be reduced.

The saturated water absorption of the polymer contained in the resin constituting the substrate film is preferably 0.03 by weight or less, more preferably 0.02 by weight or less, and particularly preferably 0.01 by weight or less. When the saturated water absorption is within the aforementioned range, changes in the in-plane retardation Re and the thickness direction retardation Rth of the substrate film with the lapse of time can be reduced. Further, deterioration of the polarizing plate and the liquid crystal display device having the multi-layer film of the present invention can be reduced, thereby making it possible to stably keep good display quality of the display device for a long period of time.

The saturated water absorption is a percentage value representing a ratio of an increased mass of a sample after being immersed in water at a certain temperature for a certain time with respect to a mass of the sample before being immersed. Usually, measurement is performed with the immersion in water at 23°C for 24 hours. The saturated water absorption of the polymer can be adjusted to the value within the aforementioned range by, e.g., reducing an amount of a polar group in the polymer. It is preferable that the polymer has no polar group from the viewpoint of further reduction of the saturated water absorption.

The resin constituting the substrate film may contain an optional component other than the polymer as long as the effect of the present invention is not significantly impaired. Examples of the optional component may include additives including: a colorant such as a pigment or a dye; a plasticizer; a fluorescent brightening agent; a dispersant; a thermal stabilizer; a light stabilizer; an ultraviolet absorber; an antistatic agent; an antioxidant; a lubricant; and an additive such as a surfactant. As the optional component, one type thereof may be solely used, and two or more types thereof may be used in combination at any ratio.

The amount of the polymer contained in the resin constituting the substrate film is usually 50% to 100% or 70% to 100%. Although the alicyclic structure containing polymer resin has high hydrophobicity, the use of the alicyclic structure containing polymer resin as the resin constituting the substrate film has an advantage of making it possible to strongly adhere to any member having high hydrophilicity with the aid of the adhesion facilitating layer. From the viewpoint of effectively taking this advantage, the amount of the optional component is preferably adjusted such that the amount of the polymer contained in the alicyclic structure containing polymer resin is, e.g., 80% to 100%, more specifically 90% to 100%.

It is preferable that the alicyclic structure containing polymer resin substantially contains no particles. That the alicyclic structure containing polymer resin substantially contains no particles means that, even when the resin contains particles, the amount of the particles is acceptable as long as it falls into a range where an increase in haze of the substrate film from the state where completely no particles are contained is 0.05% or less. The polymer having an alicyclic structure tends to have a poor affinity for many organic and inorganic particles. Therefore, when an alicyclic structure containing polymer resin containing an amount of particles exceeding the aforementioned range is stretched, the stretched product is prone to have voids. As a result, remarkable haze increase may occur.

As described above, the substrate film may have a single structure including only one layer or a multi-layer structure including two or more layers. With the substrate film having the multi-layer structure, polarizing plates having a variety of properties can be produced.

When the substrate film includes two or more layers, it may have two or more layers of one film layer type, and may also have film layers of two or more different types. The substrate film may include a layer made of a resin other than the aforementioned alicyclic structure containing polymer resin. Examples of the layer made of a resin other than the alicyclic structure containing polymer resin may include film layers having a function such as damage prevention, antireflection, antistatic, antiglare, and antifouling.

The total light transmittance of the substrate film as a converted value for 1 mm thickness is preferably 80% or more and more preferably 90% or more. The total light transmittance may be measured using a spectrophotometer (ultraviolet-visible-near infrared spectrophotometer "V-570" manufactured by JASCO Corporation) in accordance with JIS K0115.

The haze of the substrate film in 1 mm thickness is preferably 0.3% or less and more preferably 0.2% or less. The haze is an average of five measurement values measured using "turbidity meter NDH-300A" manufactured by Nippon Denshoku Industries in accordance with JIS K7361-1997.

The average thickness of the substrate film is preferably 5 µm or more, more preferably 20 µm or more, preferably 500 µm or less, and more preferably 300 µm or less. The range of the thickness fluctuation of the substrate film is preferably within ±3% of the average thickness in the lengthwise direction and the width direction. By confining the thickness fluctuation within the aforementioned range, fluctuation of the optical properties such as the retardation of the substrate film can be reduced.

The amount of a volatile component contained in the substrate film is preferably 0.1% by weight or less, more preferably 0.05% by weight or less, and further preferably 0.02% by weight or less. By confining the amount of the volatile component within the aforementioned range, size stability can be improved, and changes in the in-plane retardation Re and the thickness direction retardation Rth of the substrate film with the lapse of time can be reduced. Further, deterioration of the polarizing plate or the liquid crystal display device having the multi-layer film of the present invention can be reduced, thereby making it possible to stably keep good display quality of the display device for a long period of time. The volatile component is a substance having a molecular weight of 200 or less. Examples of the volatile component may include a residual monomer and a solvent. The amount of the volatile component may be quantified as a sum of the substances having a molecular weight of 200 or less by analysis of gas chromatography.

The method for producing the substrate film is not particularly limited. The substrate film may be obtained by molding a resin for forming the substrate film using a publicly known film molding method. Examples of the film molding method may include a cast molding method, an extrusion molding method, and an inflation molding method. Among them, a melt extrusion method using no solvent, which can efficiently reduce the amount of the residual volatile component, is preferable from the viewpoint of a global environment, a work environment, and a superior production efficiency. Examples of the melt extrusion method may include an inflation method using a die. Particularly, a method using a T-die, which is superior in productivity and thickness accuracy, is preferable.

When the substrate film includes two or more layers, the method for producing the substrate film is not particularly limited. For example, the substrate film may be produced by laminating film layers that have been separately produced. If necessary, the lamination may be effected with an adhesive agent.

As the adhesive agent, suitable one may be selected in accordance with the types of resins forming the film layers to be laminated. Example of the adhesive agent may include an acrylic adhesive agent, a urethane adhesive agent, a polyester adhesive agent, a polyvinyl alcohol adhesive agent, a polyolefin adhesive agent, a modified polyolefin adhesive agent, a polyvinyl alkyl ether adhesive agent, a rubber adhesive agent, an ethylene-vinyl acetate adhesive agent, a vinyl chloride-vinyl acetate adhesive agent, an SEBS (styrene-ethylene-butylene-styrene) copolymer adhesive agent, an SIS (styrene-isoprene-styrene) block copolymer adhesive agent, an ethylene adhesive agent such as an ethylene-styrene copolymer, and an acrylic acid ester adhesive agent such as an ethylene-methyl (meth)acrylate copolymer and an ethylene-ethyl (meth)acrylate copolymer. As the adhesive agent, one type thereof may be solely used, and two or more types thereof may be used in combination at any ratio.

The average thickness of the adhesive agent layer formed by the adhesive agent is preferably 0.1 µm or more, and more preferably 0.5 µm or more, and preferably 10 µm or less, and more preferably 5 µm or less.

When the substrate film including two or more layers is produced without using the adhesive agent, examples of the production method may include: a coextrusion molding method such as a coextrusion T-die method, a coextrusion inflation method, and a coextrusion lamination method; and a film lamination method such as dry lamination.

The substrate film including two or more layers may also be produced using, e.g., a coating forming method in which a surface of a certain film layer is coated with a solution containing a resin constituting another film layer.

Among them, the coextrusion molding method is preferable from the viewpoint of production efficiency and absence of volatile components such as a solvent remaining in the substrate film. Among the methods in the coextrusion molding method, the coextrusion T-die method is particularly preferable. The coextrusion T-die methods may be classified into a feed block type and a multi-manifold type. The multi-manifold type is more preferable from the viewpoint of being capable of reducing a fluctuation of the thicknesses of the film layers.

The substrate film may be a non-stretched film without being subjected to stretching process, and may also be a stretched film that has been subjected to the stretching process. When the substrate film includes two or more layers, the stretched film may be obtained by laminating the film layers that have subjected to the stretching processing in advance, and may also be obtained by applying stretching process to the non-stretched film having a multi-layer structure that has been obtained by, e.g., the co-extrusion molding method.

The stretching method is not particularly limited. For example, any of a uniaxial stretching method and a biaxial stretching method can be employed. Examples of the uniaxial stretching method may include: a method in which a film is uniaxially stretched in the lengthwise direction utilizing a difference in peripheral speed of rolls for film conveyance; and a method in which a film is uniaxially stretched in the width direction using a tenter stretching machine. Examples of the biaxial stretching method may include: a simultaneous biaxial stretching method in which a film is stretched in the lengthwise direction by opening intervals between clips secured to the film and simultaneously stretched in the width direction by a widening angle between guide rails; and a successive biaxial stretching method in which a film is stretched in the lengthwise direction by utilizing a difference in peripheral speed of rolls for film conveyance, and thereafter the film is stretched in the width direction by grasping both ends with clips using a tenter stretching machine. Furthermore, a diagonal stretching method may be used in which a film is subjected to continuous diagonal stretching in a direction not in parallel with or not in perpendicular to the width direction of the film using a tenter stretching machine that can apply feeding force, pulling force, or drawing force having different rates in right and left in the width direction or the lengthwise direction.

Examples of the machine for stretching may include a lengthwise uniaxial stretching machine, the tenter stretching machine, a bubble stretching machine, and a roller stretching machine. The stretching temperature is preferably (Tg - 30°C) or more, more preferably (Tg - 10°C) or more, preferably (Tg + 60°C) or less, and more preferably (Tg + 50°C) or less where Tg is the glass transition temperature of the resin constituting the film to be stretched. The stretch ratio may be appropriately selected in accordance with optical properties of the substrate film to be used. The specific stretch ratio is usually 1.05 times or more, and preferably 1.1 times or more, and usually 10.0 times or less, and more preferably 2.0 times or less.

### [3. Adhesion facilitating layer]

The adhesion facilitating layer is a cured product of the urethane composition containing the polyurethane, the crosslinking agent, and the nonvolatile base. By using the adhesion facilitating layer formed of the cured product of the urethane composition, adhesiveness can be enhanced when the multi-layer film of the present invention is laminated to any member. The adhesion facilitating layer can retain excellent adhesiveness for a long period of time under a high humidity environment.

### [3.1. Polyurethane]

The tensile elastic modulus of the polyurethane is usually 1,000 N/mm² or more, preferably 1,200 N/mm² or more, and more preferably 1,400 N/mm² or more, and usually 5,000 N/mm² or less, preferably 4,000 N/mm² or less, and more preferably 3,000 N/mm² or less. By using the polyurethane having a tensile elastic modulus equal to or larger than the lower limit value of the aforementioned range, adhesiveness of the adhesion facilitating layer can be enhanced. By using the polyurethane having a tensile elastic modulus equal to or smaller than the upper limit value of the range, excessively high hardness of adhesion facilitating layer can be avoided, thereby making it possible to prevent breakage of the adhesion facilitating layer.

Conventional adhesion facilitating layers have generally used polymers having a low tensile elastic modulus. This is because it has been considered that the adhesion facilitating layer is preferably flexible in such a degree that the adhesion facilitating layer is deformable in accordance with unevenness of a to-be-adhered surface from the viewpoint of enhancement of the adhesiveness by being in contact with the to-be-adhered surface with a large area. In contrast, the adhesion facilitating layer according to the present invention uses the polyurethane having a relatively high tensile elastic modulus unlike the conventional ones, thereby achieving high adhesiveness.

The value of the tensile elastic modulus of the polyurethane is a value measured before being mixed with components such as the crosslinking agent and the nonvolatile base. The specific measurement method of the tensile elastic modulus of the polyurethane is as follows.

Firstly, as a sample, an aqueous dispersion of the polyurethane (a solution may be used if necessary) is prepared. The aqueous dispersion is poured into a glass container such that the film thickness becomes 100 µm after the aqueous dispersion is dried. After being left at a room temperature for 24 hours, the aqueous dispersion is dried at 50°C for 3 hours and at 120°C for 20 minutes so as to obtain a sheet of the polyurethane.

The obtained sheet of the polyurethane is punched in a dumbbell shape in accordance with JIS K7162 so as to obtain a test piece.

The test piece is subjected to a tensile test using a tensile test machine at a tensile speed 5 mm/minute. The tensile elastic modulus is measured from a gradient of an obtained stress-strain curve (SS curve).

The tensile elastic modulus of the polyurethane may be controlled by, e.g., adjusting types of monomers and their ratio in the polyurethane. Enumerating specific examples of the method for controlling the tensile elastic modulus, the tensile elastic modulus of the polyurethane may be adjusted by adjusting the types of macropolyols and their charging ratio in the monomers serving as raw materials of the polyurethane.

The polyurethane for use may be one obtained by reacting (i) a component containing two or more in average of active hydrogen atoms per one molecule, with (ii) a polyisocyanate component.

The polyurethane for use may also be one produced by performing urethanization reaction of the component (i) and the component (ii) to obtain a prepolymer containing an isocyanate group, subjecting the prepolymer to chain extension using a chain extender, and then adding water thereto to produce a dispersion. The prepolymer may be obtained by urethanization reaction of the component (i) and the component (ii) under conditions wherein the isocyanate group is excessive. The urethanization reaction may be performed in an organic solvent that is inactive with the reaction and has a large affinity for water. Before the chain extension of the prepolymer, the prepolymer may be neutralized. Examples of the chain extension method of the prepolymer containing the isocyanate group may include a method wherein the prepolymer containing the isocyanate group is reacted with a chain extender in the presence of a catalyst if necessary. In this case, water, water-soluble polyamine, or glycols may be used as the chain extender.

The component (i) is a polyether-polyol. Examples of polyether polyol may include: an alkylene oxide adduct of the aforementioned polyol compound; a ring-opened (co)polymer of an alkylene oxide and a cyclic ether (e.g., tetrahydrofuran); a polyethylene glycol, a polypropylene glycol, an ethylene glycol-propylene glycol copolymer, and a 1,4-butanediol copolymer; and glycols such as a glycol, a polytetramethylene glycol, a polyhexamethylene glycol, and a polyoctamethylene glycol. Specific examples of the polyether polyol may include a poly(oxypropylene ether) polyol and a poly(oxyethylenepropylene ether) polyol.

Examples of the component (ii) to be reacted with the component (i) (i.e., a polyisocyanate component) may include a compound having two or more in average of isocyanate groups per one molecule. The compound may be an aliphatic compound, an alicyclic compound, or an aromatic compound.

The aliphatic polyisocyanate compound is preferably an aliphatic diisocyanate having 1 to 12 carbon atoms such as hexamethylene diisocyanate, 2,2,4-trimethylhexane diisocyanate, and hexane diisocyanate (HDI).

The alicyclic polyisocyanate compound is preferably an alicyclic diisocyanate having 4 to 18 carbon atoms, and examples thereof may include 1,4-cyclohexane diisocyanate, methylcyclohexylene diisocyanate, isophorone diisocyanate (IPDI), and dicyclohexylmethane diisocyanate (HMDI).

Examples of the aromatic polyisocyanate may include tolylene diisocyanate (TDI), 4,4'-diphenylmethane diisocyanate, and xylylene diisocyanate.

As the component (ii), one type thereof may be solely used, and two or more types thereof may be used in combination at any ratio.

As the components (i) and (ii), any of the appropriate ones may be selected in accordance with use of the multi-layer film of the present invention. The polyether-based polyurethane has an ether bond that is durable against hydrolysis. Such a polyurethane thus has durability against deterioration in a high humidity environment, thereby making it possible to prevent tensile elastic modulus of the adhesion facilitating layer from being reduced with the lapse of time. As a result, reduction of adhesiveness in a high humidity environment can be effectively prevented.

Such a polyurethane may have an acid structure in its molecular structure. The polyurethane having the acid structure can be dispersed into water without a surfactant or with a little amount of surfactant. As a result, water resistance of the adhesion facilitating layer is expected to be improved. This is referred to as a self-emulsifying type polyurethane, which means that dispersion stabilization of the particles of the polyurethane can be achieved in water only by molecular ionic property without a surfactant. The polyurethane having the acid structure requires no surfactant or a little amount of surfactant, thereby being superior in adhesiveness with the substrate film and making it possible to retain high transparency.

Example of the acid structure may include an acid group such as a carboxy group (-COOH) or a sulfo group (-SO₃H). The acid structure may be present in the side chain or at the end of the chain in the polyurethane. As the acid structure, one type thereof may be solely used, and two or more types thereof may be used in combination at any ratio.

The amount of the acid structure is, as an acid value in a urethane composition, preferably 20 mg KOH/g or more, and more preferably 25 mg KOH/g or more, and preferably 250 mg KOH/g or less, and more preferably 150 mg KOH/g or less. By setting the acid value to equal to or larger than the lower limit value of the aforementioned range, dispersibility of the polyurethane in water can be improved. By setting the acid value to equal to or smaller than the upper limit value of the range, water resistance of the adhesion facilitating layer can be improved.

Example of the method for introducing the acid structure in the polyurethane may include a method in which a carboxy group is preliminarily introduced in polyether polyol by replacing dimethylol alkanoic acid with a part or all of the components (i). Examples of the dimethylolalkanoic acid used therefor may include dimethylol acetic acid, dimethylol propionic acid, and dimethylol butyric acid. As the dimethylolalkanoic acid, one type thereof may be solely used, and two or more types thereof may be used in combination at any ratio.

In the urethane composition, a part or all of the acid structure included in the polyurethane is neutralized by the nonvolatile base. As a result of the neutralization of the acid structure, the multi-layer film can retain the properties of the optical material and adhere with any member with strong adhesive strength even if the multi-layer film has a heat history of being exposed to high temperature. Furthermore, even when the acid structure is neutralized, particles of the polyurethane can be dispersed into water without a surfactant or with a little amount of surfactant.

The ratio of the neutralized acid structures in the acid structures that the polyurethane contains is preferably 20% or more and particularly preferably 50% or more. As a result of the neutralization of 20% or more of the acid structure, the multi-layer film can retain the properties of the optical material and adhere with any member with strong adhesive strength even if the multi-layer film has a heat history of being exposed to high temperature.

It is preferable that the polyurethane has a polar group for making it possible to react with the crosslinking agent. Examples of the polar group may include carboxy group, carbonyloxycarbonyl group, epoxy group, hydroxy group, oxy group, ester group, silanol group, silyl group, amino group, nitrile group, and sulfo group. Among them, methylol group, hydroxy group, carboxy group, and amino group are preferable, hydroxy group and carboxy group are more preferable, and carboxy group is particularly preferable. The amount of the polar group in the polyurethane is preferably 0.0001 equivalent/kg or more, and more preferably 0.001 equivalent/kg or more, and preferably 1 equivalent/kg or less.

As the polyurethane, resins that are commercially available as an aqueous urethane resin may be used. The aqueous urethane resin is a composition that contains the polyurethane and water, and a composition in which usually the polyurethane and optional components, which are contained if necessary, are dispersed in water. Examples of the usable aqueous urethane resin may include "ADEKA BONTIGHTER" series manufactured by ADEKA Corporation, "OLESTER" series manufactured by Mitsui Chemicals, "BONDIC" series and "HYDRAN (e.g., WLS201 and WLS202)" series manufactured by DIC Corporation, "Impranil" series manufactured by Bayer Material Science, "Poise" series manufactured by Kao, "Sunprene" series manufactured by Sanyo Chemical Industries, "Super flex" series manufactured by Dai-ichi Kogyo Seiyaku, "NeoRez" series manufactured by Kusumoto Chemicals, and "Sancure" series manufactured by Lubrizol Corporation. As the polyurethane, one type thereof may be solely used, and two or more types thereof may be used in combination at any ratio.

The polyurethane may exist in the polyurethane composition in any state. The polyurethane may be dispersed in a particle state or may be dissolved in another component such as a solvent. Among these states, the polyurethane is often dispersed in a particle state. In this case, the average particle diameter of the particles of the polyurethane is preferably 0.01 µm to 0.4 µm from the viewpoint of the optical properties of the multi-layer film of the present invention.

### [3.2. Crosslinking agent]

The crosslinking agent is capable of reacting with a reactive group in the polyurethane to form a bond, to thereby form a crosslink in the polyurethane. The crosslink can improve the mechanical strength, adhesiveness, and humidity- and heat-resistance of the adhesion facilitating layer. Usually, the crosslinking agent is capable of forming a crosslinked structure by reacting with the polar group in the polyurethane. Examples of the polar group in the polyurethane may include a carboxy group and its anhydride group and an unreacted hydroxy group remaining after the reaction of the component (i) and the component (ii).

As the crosslinking agent, e.g., compounds that have, per one molecule, two or more functional groups capable of forming a bond by reacting with the reactive group in the polyurethane may be used. Among them, a compound having a functional group capable of reacting with the carboxy group and its anhydride group in the polyurethane is preferable as the crosslinking agent.

Specific examples of the crosslinking agent may include an epoxy compound, a carbodiimide compound, an oxazoline compound, and an isocyanate compound. As the crosslinking agent, one type thereof may be solely used, and two or more types thereof may be used in combination at any ratio.

As the epoxy compound, a multifunctional epoxy compounds having two or more epoxy groups per one molecule may be used. Particularly preferable are epoxy compounds having solubility to water and epoxy compounds that are capable of being dispersed in water to be emulsified. When the epoxy group has solubility to water or is capable of being emulsified and the urethane composition is an aqueous resin, the epoxy compound can improve coating property of the aqueous resin, thereby making it possible to readily produce the adhesion facilitating layer. The aqueous resin is a composition that contains a solid content such as the polymer in a state of being dissolved or dispersed in an aqueous solvent such as water.

Examples of the epoxy compound may include: a diepoxy compound obtained by etherifying 1 mol of a glycol such as ethylene glycol, diethylene glycol, triethylene glycol, polyethylene glycol, propylene glycol, dipropylene glycol, 1,4-butanediol, 1,6-hexane glycol, and neopentyl glycol with 2 mol of epichlorohydrin; a polyepoxy compound obtained by etherifying 1 mol of a polyhydric alcohol such as glycerol, polyglycerol, trimethylolpropane, pentaerythritol, and sorbitol with 2 mol or more of epichlorohydrin; and a diepoxy compound obtained by etherifying 1 mol of a dicarboxylic acid such as phthalic acid, terephthalic acid, otalic acid, or adipic acid with 2 mol of epichlorohydrin.

Specific examples of the epoxy compound may include 1,4-bis(2',3'-epoxypropyloxy)butane, 1,3,5-triglycidyl isocyanurate, 1,3-diglycidyl-5-(γ-acetoxy-β-oxypropyl) isocyanurate, sorbitol polyglycidyl ethers, polyglycerol polyglycidyl ethers, pentaerythritol polyglycidyl ethers, diglyceryl polyglycerol ether, 1,3,5-triglycidyl (2-hydroxyethyl) isocyanurate, glycerol polyglycerol ethers, and trimethylolpropane polyglycidyl ethers.

Example of commercially available epoxy compounds may include "DENACOL (e.g., DENACOL EX-521 and EX-614B)" series manufactured by Nagase ChemteX Corporation.

As the epoxy compound, one type thereof may be solely used, and two or more types thereof may be used in combination at any ratio.

The amount of the epoxy compound is usually 2 parts by weight or more, preferably 5 parts by weight or more, and more preferably 8 parts by weight or more, and usually 40 parts by weight or less, preferably 35 parts of weight or less, and more preferably 30 parts by weight or less, with respect to 100 parts by weight of the polyurethane. When the amount of the epoxy compound is equal to or larger than the lower limit value of the aforementioned range, reaction of the epoxy compound and the polyurethane can sufficiently proceed, thereby making it possible to appropriately enhance mechanical strength of the adhesion facilitating layer. When the amount of the epoxy compound is equal to or smaller than the upper limit value of the range, residual unreacted epoxy compound can be reduced, thereby making it possible to appropriately enhance mechanical strength of the adhesion facilitating layer.

The amount of the epoxy compound is preferably 0.2 time or more, more preferably 0.4 time or more, and particularly preferably 0.6 time or more, and preferably 5.0 times or less, more preferably 4.0 times or less, and particularly preferably 3.0 times or less, on a weight basis with respect to the amount of the epoxy compound equivalent to the amount of the polar group of the polyurethane. The amount of the epoxy compound equivalent to the amount of the polar group of the polyurethane is a theoretical amount of the epoxy compound capable of reacting with the total amount of the polar group of the polyurethane without excessiveness nor insufficiency. The polar group of the polyurethane is capable of reacting with the epoxy group of the epoxy compound. Therefore, when the amount of the epoxy compound is confined within the aforementioned range, reaction of the polar group and the epoxy compound can proceed in an appropriate degree, thereby making it possible to effectively enhance mechanical strength of the adhesion facilitating layer.

As the carbodiimide compound, a compound having two or more carbodiimide groups per one molecule may be used. The carbodiimide compound is produced using an organic isocyanate such as an organic monoisocyanate, an organic diisocyanate, and an organic triisocyanate as a row material. Examples of the organic isocyanate may include an aromatic isocyanate, an aliphatic isocyanate, and mixtures thereof. Thus, as the organic group in organic isocyanate, any of an aromatic organic group and an aliphatic organic group may be used, and a combination of an aromatic organic group and an aliphatic organic group may also be used. Among them, an organic isocyanate having an aliphatic organic group is particularly preferable from the viewpoint of reactivity. The carbodiimide compound is usually synthesized by condensation reaction of an organic diisocyanate.

Specific examples of organic isocyanate may include: organic diisocyanates such as 4,4'-diphenylmethane diisocyanate, 4,4-diphenyldimethylmethane diisocyanate, 1,4-phenylene diisocyanate, 2,4-tolylene diisocyanate, 2,6-tolylene diisocyanate, hexamethylene diisocyanate, cyclohexane diisocyanate, xylylene diisocyanate, 2,2,4-trimethylhexamethylene diisocyanate, 4,4'-dicyclohexylmethane diisocyanate, and 1,3-phenylene diisocyanate; and organic monoisocyanates such as isophorone isocyanate, phenyl isocyanate, cyclohexyl isocyanate, butyl isocyanate, and naphthyl isocyanate.

Examples of the commercially available carbodiimide compound may include "CARBODILITE (e.g., CARBODILITE V-02, V-02-L2, SV-02, V-04, and E-02) produced by Nisshinbo Chemical, which are available as commercial products.

As the carbodiimide compound, one type thereof may be solely used, and two or more types thereof may be used in combination at any ratio.

The amount of the carbodiimide compound is usually 1 part by weight or more, and preferably 3 parts by weight or more, and usually 40 parts by weight or less, and preferably 30 parts by weight or less with respect to 100 parts by weight of the polyurethane. When the amount of the carbodiimide compound is equal to or larger than the lower limit value of the aforementioned range, reaction of the carbodiimide compound and the polyurethane can sufficiently proceed, thereby making it possible to appropriately enhance mechanical strength of the adhesion facilitating layer. When the amount of the carbodiimide compound is equal to or smaller than the upper limit value of the range, residual unreacted carbodiimide compound can be reduced, thereby making it possible to appropriately enhance mechanical strength of the adhesion facilitating layer.

As the oxazoline compound, a polymer having an oxazoline group represented by the following formula (I) may be used. In formula (I), R⁴, R⁵, R⁶, and R⁷ are the same or different, and each represents one selected from a group consisting of a hydrogen atom, a halogen atom, an alkyl group, an aralkyl group, a phenyl group, and a substituted phenyl group.

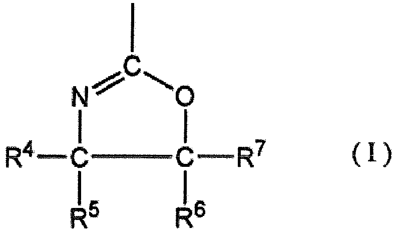

The oxazoline compound may be produced by, e.g., solution polymerization of a monomer component that contains addition polymerizable oxazoline and any unsaturated monomer if necessary in an aqueous solvent using a known polymerization method. Examples of the addition polymerizable oxazoline may include a compound represented by the following formula (II). In formula (II), R⁴, R⁵, R⁶, and R⁷ represent the same as those defined in formula (I). In formula (II), R⁸ represents a non-cyclic organic group having an addition polymerizable unsaturated bond.

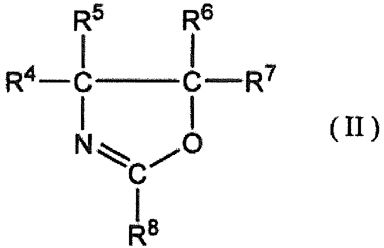

Specific examples of the addition polymerizable oxazoline may include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. One type thereof may be solely used, and two or more types thereof may be used in combination at any ratio. Among them, 2-isopropenyl-2-oxazoline, which is readily available from industrial distribution, is preferable.

The amount of the addition polymerizable oxazoline is preferably 3 parts by weight or more and preferably 100 parts by weight or less with respect to 100 parts by weight of all of the monomer components used for producing the oxazoline compound. With the amount, curing of the urethane composition containing the oxazoline compound can sufficiently proceed, thereby making it possible to obtain the adhesion facilitating layer having excellent durability and water resistance.

As the optional unsaturated monomer for producing the oxazoline compound, any monomer that is capable of copolymerizing with the addition polymerizable oxazoline and does not react with the oxazoline group may be used. Such an optional unsaturated monomer may be selected from the aforementioned monomers and used.

Examples of the commercially available water-soluble oxazoline compound may include Epocross WS-500 and WS-700 produced by Nippon Shokubai. Examples of the commercially available emulsion type oxazoline compound may include Epocross K-2010, K-2020, and K-2030 produced by Nippon Shokubai. Among them, those of water-soluble type having high reactivity with the polyurethane is preferable.

As the oxazoline compound, one type thereof may be solely used, and two or more types thereof may be used in combination at any ratio.

The amount of the oxazoline compound may be set such that the molar ratio of the polar group in the polyurethane with respect to the oxazoline group in the oxazoline compound (the number of moles of the polar group/the number of moles of the oxazoline group) is in a certain range. Specifically, the amount may be set such that the molar ratio is 100/20 to 100/100. By setting the molar ratio to equal to or smaller than the upper limit value of the aforementioned range, remaining of unreacted polar groups can be avoided. By setting the molar ratio to equal to or larger than the lower limit value of the range, excessiveness of oxazoline groups can be avoided and excessiveness of hydrophilic groups can thus be avoided.

When the polyurethane has the carboxy group and the carboxy group is neutralized, the oxazoline group and carboxylate salt hardly react in the reaction of the polyurethane and the oxazoline compound. The reactivity may thus be controlled by adjusting the type and a degree of non-volatility of the nonvolatile base used for the neutralization.

As the isocyanate compound, a compound having two or more isocyanate groups per one molecule may be used. The isocyanate compound may be an aliphatic compound, an alicyclic compound, or an aromatic compound. Specific examples of the isocyanate compound may include those that are the same as the examples of the component (ii) described as the raw material of the polyurethane.

Among the aforementioned crosslinking agents, the epoxy compound and the carbodiimide compound are preferable, and the epoxy compound is particularly preferable. The use of the epoxy compound as the crosslinking agent can markedly enhance particularly the adhesiveness of the adhesion facilitating layer. The use of the carbodiimide compound as the crosslinking agent can improve a pot life of the urethane composition.

### [3.3. Nonvolatile base]

Examples of the nonvolatile base may include bases that are substantially nonvolatile under processing conditions when the urethane composition applied onto the substrate film is dried. The substantially nonvolatile means that the reduction of the nonvolatile base is usually 80% or less. The processing conditions when the urethane composition applied onto the substrate film is dried is, e.g., that the urethane composition is left at 80°C for one hour. The nonvolatile base can function as a neutralizer that neutralizes the acid structure of the polyurethane.

As the nonvolatile base, inorganic bases may be used, and organic bases may also be used. Among them, an organic base having a boiling point of 100°C or more is preferable, an amine compound having a boiling point of 100°C or more is more preferable, and an amine compound having a boiling point of 200°C or more is particularly preferable. The organic base may be a low-molecular compound, and may also be a polymer.

Examples of the inorganic base serving as the nonvolatile base may include sodium hydroxide and potassium hydroxide. Examples of the organic base serving as the nonvolatile base may include 2-amino-2-methyl-1-propanol (AMP), triethanol amine, triisopropanol amine (TIPA), monoethanol amine, diethanol amine, tri[(2-hydroxy)-1-propyl]amine, 2-amino-2-methyl-1,3-propanediol (AMPD), 2-amino-2-hydroxymethyl-1,3-propane potassium hydroxide, a zinc ammonium complex, a copper ammonium complex, a silver ammonium complex, γ-aminopropyltriethoxysilane, γ-aminopropyltrimethoxysilane, N-β(aminoethyl)-γ-aminopropyltrimethoxysilane, N-β(aminoethyl)-γ-aminopropyltrimethyldimethoxysilane, N-phenyl-γ-aminopropyltrimethoxysilane, N,N-bis(trimethylsilyl)urea, 3-ureidopropyltrimethoxysilane, 3-aminopropyl-tris(2-methoxy-ethoxy-ethoxy)silane, N-methyl-3-aminopropyl trimethoxycarboxylic acid dihydrazide, oxalic acid dihydrazide, malonic acid dihydrazide, succinic acid dihydrazide, adipic acid dihydrazide, sebacic acid dihydrazide, dodecanedioic acid dihydrazide, isophthalic acid dihydrazide, terephthalic acid dihydrazide, quinoline, picoline, pyridine, morpholine, piperazine, cyclohexylamine, hexamethylenediamine, N,N-dimethylformamide, ethylenediamine, diethylenetriamine, tetraethylenepentamine, pentaethylenepentamine, monoethanolamine, diethanolamine, isopropanolamine, N,N-diethylmethanolamine, N,N-dimethylethanolamine, aminoethylethanolamine, N-methyl-N-N-diethanolamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyldicyclohexylmethanediamine, 1,2-cyclohexanediamine, 1,4-cyclohexanediamine, aminoethylethanolamine, aminopropylethanolamine, aminohexylethanolamine, aminoethylpropanolamine, aminopropylpropanolamine, aminohexylpropanolamine, diethylenetriamine, dipropylenetriimidazole, 1-(2-aminoethyl)-2-methylimidazole, 1-(2-aminoethyl)-2-ethylimidazole, 2-aminoimidazolesulfate, 2-(2-aminoethyl)-benzimidazole, pyrazole, 5-aminopyrazole, 1-methyl-5-aminopyrazole, 1-isopropyl-5-aminopyrazole, 1-benzil-5-aminopyrazole, 1,3-dimethyl-5-aminopyrazole, 1-isopropyl-3-methyl-5-aminopyrazole, 1-benzil-3-methyl-5-aminopyrazole, 1-methyl-4-chloro-5-aminopyrazole, 1-methyl-4-cyano-5-aminopyrazole, 1-isopropyl-4-chloro-5-aminopyrazole, 3-methyl-4-chloro-5-aminopyrazole, 1-benzil-4-chloro-5-aminopyrazole, and an amino resin (e.g., a 1,3-dimethyl-4-chloro-melamine resin, an urea resin, or a guanamine resin). One type thereof may be solely used, and two or more types thereof may be used in combination at any ratio.

The amount of the nonvolatile base is usually 0.5 part by weight or more, preferably 1 part by weight or more, and more preferably 2 parts by weight or more, and usually 30 parts by weight or less, preferably 20 parts by weight or less, and more preferably 10 parts by weight or less, with respect to 100 parts by weight of the polyurethane. When the amount of the nonvolatile base is equal to or larger than the lower limit value of the aforementioned range, sufficient adhesive strength can be obtained. When the amount of the nonvolatile base is equal to or smaller than the upper limit value of the range, decolorization of a polarizer made of polyvinyl alcohol can be prevented.

### [3.4. Particle]

It is preferable that the urethane composition contains particles. The urethane composition containing particles can increase surface roughness of the adhesion facilitating layer formed of the cured product of the urethane composition. The increased surface roughness can improve slipperiness of the surface of the adhesion facilitating layer, thereby making it possible to prevent blocking of the multi-layer film and the occurrence of wrinkles when the multi-layer film is wound.

As the particles, any of inorganic particles and organic particles may be used. The water dispersible particles are preferably used. Examples of the material of the inorganic particles may include an inorganic oxide such as silica, titania, alumina, and zirconia; calcium carbonate, talc, clay, fired kaolin, fired calcium silicate, hydrated calcium silicate, aluminum silicate, magnesium silicate, and calcium phosphate. Examples of the material of the organic particles may include a silicone resin, a fluorocarbon resin, and an acrylic resin. Among them, silica is preferable. The particles of silica are superior in ability of preventing the occurrence of wrinkles and in transparency, low tendency to cause haze, and have no colors, whereby influence on the optical properties of the multi-layer film of the present invention is small. In addition, silica has good dispersibility and dispersion stability in the urethane composition. Among particles of silica, particles of amorphous colloidal silica particles are particularly preferable.

The average particle diameter of the particles is usually 1 nm or more, preferably 5 nm or more, and more preferably 10 nm or more, and usually 500 nm or less, preferably 300 nm or less, and more preferably 200 nm or less. When the particles have an average particle diameter equal to or larger than the lower limit value of the aforementioned range, slipperiness of the adhesion facilitating layer can be effectively enhanced. When the particles have an average particle diameter equal to or smaller than the upper limit value of the range, haze in the adhesion facilitating layer can be kept at a low value.

The amount of the particles is usually 1 part by weight or more, preferably 3 parts by weight or more, and more preferably 5 parts by weight or more, and usually 50 parts by weight or less, preferably 40 parts by weight or less, and more preferably 30 parts by weight or less, with respect to 100 parts by weight of the polyurethane. When the amount of the particles is equal to or larger than the lower limit value of the aforementioned range, occurrence of wrinkles when the multi-layer film is wound can be prevented. When the amount of the particles is equal to or smaller than the upper limit value of the range, an outer appearance of the multi-layer film without white turbidity can be retained.

### [3.5. Wetting agent]

It is preferable that the urethane composition contains a wetting agent. The use of the wetting agent can achieve good coating property when the urethane composition is applied onto the substrate film.

As the wetting agent, e.g., an acetylene-based surfactant or a fluorine-based surfactant may be used. As the acetylene-based surfactant, e.g., Surfynol series and Dynol series produced by Air Products and Chemicals may be used. As the fluorine-based surfactant, e.g., Megafac series produced by DIC Corporation, Ftergent series produced by Neos, and Surflon series produced by AGC may be used. The acetylene-based surfactant is preferably used as the wetting agent from the viewpoint of recoating property.

As the wetting agent, one type thereof may be solely used, and two or more types thereof may be used in combination at any ratio.

The using amount of the wetting agent is usually 0.01% by weight or more, preferably 0.05% by weight or more, and more preferably 0.1% by weight or more, and usually 5% by weight or less, preferably 4% by weight or less, and more preferably 3% by weight or less, with respect to the amount of solid content in the urethane composition (a coating liquid). When the amount of the wetting agent is equal to or larger than the lower limit value of the aforementioned range, sufficient coating property can be obtained. When the amount of the wetting agent is equal to or smaller than the upper limit value of the range, bleeding out of the wetting agent can be suppressed and good recoating property can also be achieved.

### [3.6. Solvent]

The urethane composition usually contains a solvent. As the solvent, water or a water-soluble solvent is used. Examples of the water-soluble solvent may include methanol, ethanol, isopropyl alcohol, acetone, tetrahydrofuran, N-methylpyrrolidone, dimethyl sulfoxide, ethylene glycol monomethyl ether, and ethylene glycol monobutyl ether. Among them, water is preferably used as the solvent. As the solvent, one type thereof may be solely used, and two or more types thereof may be used in combination at any ratio.

The amount of the solvent may be set such that the viscosity of the urethane composition is in a range suitable for applying the urethane composition. The amount of the solvent is usually set such that the solid content concentration of the urethane composition is in a desired range. The desired range is preferably 0.5% by weight or more, and more preferably 1% by weight or more, and preferably 15% by weight or less, and more preferably 10% by weight or less. This range makes it possible for the urethane composition to have good handleability and coating property.

### [3.7. Optional components]

The urethane composition may contain a curing accelerator in combination with the crosslinking agent. As the curing accelerator, any publicly known curing accelerator used for forming the adhesion facilitating layer may be used. For example, when an epoxy compound is used as the crosslinking agent, a tertiary amine compound (excluding a compound containing a 2,2,6,6-tetramethylpiperidyl group having tertiary amine at 4-position) and a boron trifluoride complex are preferable for the curing accelerator. As the curing accelerator, one type thereof may be solely used, and two or more types thereof may be used in combination at any ratio.

The amount of the curing accelerator is usually 0.001 part by weight or more, preferably 0.01 part by weight or more, and more preferably 0.03 part by weight or more, and usually 30 parts by weight or less, preferably 10 parts by weight or less, and more preferably 5 parts by weight or less, with respect to 100 parts by weight of the polyurethane.

The urethane composition may contain an auxiliary curing agent in combination with the crosslinking agent. As the auxiliary curing agent, any publicly known auxiliary curing agent used for forming the adhesion facilitating layer may be used. Specific examples of the auxiliary curing agent may include: an oxime-nitroso auxiliary curing agent such as quinone dioxime, benzoquinone dioxime, or p-nitrosophenol; a maleimide auxiliary curing agent such as N,N-m-phenylene bismaleimide; an allyl auxiliary curing agent such as diallyl phthalate, triallyl cyanurate, or triallyl isocyanurate; a methacrylate auxiliary curing agent such as ethylene glycol dimethacrylate or trimethylolpropane trimethacrylate; and a vinyl auxiliary curing agent such as vinyl toluene, ethylvinylbenzene, or divinylbenzene. As the auxiliary curing agent, one type thereof may be solely used, and two or more types thereof may be used in combination at any ratio.

The amount of the auxiliary curing agent is usually 1 part by weight or more, and preferably 10 parts by weight or more, and usually 100 parts by weight or less, and preferably 50 parts by weight or less, with respect to 100 parts by weight of the crosslinking agent.

As long as the effect of the present invention is not significantly impaired, the urethane composition may contain a heat-resistant stabilizer, a weather-resistant stabilizer, a leveling agent, a surfactant, an antioxidant, an antistatic agent, a slipping agent, an anti-blocking agent, an anti-fogging agent, a lubricant, a dye, a pigment, a natural oil, a synthetic oil, and a wax as an optional component. One type thereof may be solely used, and two or more types thereof may be used in combination at any ratio.

### [3.8. Properties of urethane composition]

The urethane composition is usually a fluid composition. The viscosity of the urethane composition is preferably 15 mPa·s or less and particularly preferably 10 mPa·s or less. The urethane composition having a viscosity within the aforementioned range makes it possible for the urethane composition to be uniformly applied onto the surface of the substrate film. The lower limit of the viscosity of the urethane composition is not particularly limited but is preferably 0.25 mPa·s or more. The value of the viscosity is obtained by measurement using a tuning-fork vibration viscometer under a condition at 25°C.

The viscosity of the urethane composition may be adjusted by, e.g., the ratio of the solvent and the diameters of the particles in the urethane composition.

### [3.9. Method for producing adhesion facilitating layer]

The adhesion facilitating layer is a layer formed of the cured product of the urethane composition. The adhesion facilitating layer is usually directly provided on the substrate film without another layer such as a layer of an adhesive agent interposed therebetween. The adhesion facilitating layer may be provided on only one side of the substrate film, and may also be provided on both sides. From the viewpoint of improving ability of the multi-layer film having the adhesion facilitating layer to be wound in a roll, the adhesion facilitating layer is preferably provided on only one side of the substrate film. The adhesion facilitating layer may be produced by a production method that includes a step of forming a film of the urethane composition on the substrate film and a step of curing the film of the urethane composition.

When the film of the urethane composition is formed on the substrate film, a coating method is usually used. As the coating method, any publicly known coating methods may be employed. Specific examples of the coating method may include a wire bar coating method, a dipping method, a spray method, a spin coating method, a roll coating method, a gravure coating method, an air knife coating method, a curtain coating method, a slide coating method, and an extrusion coating method.

After the film of the urethane composition is formed on the substrate film, the urethane composition, which forms the film, is cured. As a result, the adhesion facilitating layer is obtained as the layer of the cured product of the urethane composition. As the urethane composition usually contains a solvent, the solvent is removed by being dried when the urethane composition is cured. Any methods may be used as a drying method. For example, a reduced-pressure drying method and a heat drying method may be performed. Among them, the urethane composition is preferably cured by heat drying from the viewpoint of causing the rapid reaction such as crosslinking reaction in the urethane composition. The heat drying usually causes the crosslinking reaction in the urethane composition.

When the resin is cured by heating, the heating temperature is appropriately set in a range in which a solvent can be dried and the polymer component in the urethane composition can be cured. When a stretched film is used as the substrate film and the retardation generated in the substrate film is intended to be kept unchanged, the heating temperature is preferably set to a temperature at which no orientation relaxation occurs in the substrate film. Specifically, the heating temperature is preferably (Tg - 30°C) or more, and more preferably (Tg - 10°C) or more, and preferably (Tg + 60°C) or less, and more preferably (Tg + 50°C) or less where Tg is the glass transition temperature of the material forming the substrate film.

Before the film of the urethane composition is formed on the substrate film, surface modification treatment is preferably performed on the surface of the substrate film so as to enhance the adhesiveness between the substrate film and the adhesion facilitating layer. Examples of the surface modification treatment performed on the substrate film may include energy ray irradiation treatment and chemical treatment. Examples of the energy ray irradiation treatment may include corona discharge treatment, plasma treatment, electron beam treatment, and ultraviolet ray irradiation treatment. From the viewpoint of treatment efficiency, the corona discharge treatment and the plasma treatment are preferable, and the corona discharge treatment is particularly preferable. Examples of the chemical treatment may include saponification treatment and a method in which the substrate film is immersed in an oxidizing agent aqueous solution such as a potassium dichromate solution or a concentrated sulfuric acid, and thereafter washed with water.

On the surface of the adhesion facilitating layer, hydrophilization surface treatment is preferably performed. The surface of the adhesion facilitating layer usually serves as a laminating surface when the multi-layer film of the present invention is laminated to any member. The hydrophilization surface treatment further improves the hydrophilicity of the surface of the adhesion facilitating layer, thereby making it possible to markedly enhance the adhesiveness between the multi-layer film of the present invention and any member.

Examples of the hydrophilization surface treatment performed on the adhesion facilitating layer may include corona discharge treatment, plasma treatment, saponification treatment, and ultraviolet ray irradiation treatment. Among them, from the viewpoint of treatment efficiency, the corona discharge treatment and the plasma treatment are preferable, and the corona discharge treatment is more preferable. As for the plasma treatment, atmospheric pressure plasma treatment is preferable.

The hydrophilization surface treatment preferably causes an average water contact angle of the surface of the adhesion facilitating layer to be in a desired range. The specific range of the average water contact angle is preferably 80° or less, more preferably 70° or less, and particularly preferably 60° or less, and usually 20° or more. The standard deviation of the water contact angle is preferably 0.01° to 5°. The adhesion facilitating layer having such a water contact angle on its surface can strongly adhesively bond the multi-layer film of the present invention to any member such as a polarizer.

The water contact angle may be obtained by a θ/2 method using a contact angle meter.

The average water contact angle is obtained by, e.g., the following procedure: a water contact angle is measured at each of 20 points randomly selected in an area of 100 cm² on the surface of the adhesion facilitating layer on which the hydrophilization surface treatment has been performed, and an arithmetic average of the measurement values is calculated. The standard deviation of the water contact angle is calculated from the measurement values.

The hydrophilization surface treatment can introduce a functional group such as hydroxy group, carboxy group, carbonyl group, amino group, and sulfonic acid group on the surface of the adhesion facilitating layer.

In the corona discharge treatment, a wire electrode, a flat electrode, or a roll electrode structure is preferably employed for the electrode structure. Examples of the material of the electrode may include metals such as iron, copper, aluminum, and a stainless steel. Examples of the electrode shape may include a thin plate shape, a knife edge shape, and a brush shape.

In the corona discharge treatment, it is preferable that the treatment is performed using a dielectric interposed between the film to be treated and the electrode, for achieving uniform discharge. As the dielectric, it is preferable to use one having a relative dielectric constant of 10 or more. It is preferable that the dielectric is provided in a structure wherein each of the electrodes at both poles is sandwiched by the dielectrics. Examples of the material of the dielectric may include ceramic; plastic such as silicone rubber, polytetrafluoroethylene, and polyethylene terephthalate; glass; quartz; silicon dioxide; a metal oxide such as aluminum oxide, zirconium dioxide, and titanium dioxide; and a compound such as barium titanate. Particularly, it is advantageous for performing the corona discharge treatment at a low voltage and at a high speed that a solid dielectric having a relative dielectric constant of 10 or more (under an environment at 25°C) is interposed. Examples of the dielectric having a relative dielectric constant of 10 or more may include: a metal oxide such as zirconium dioxide and titanium dioxide; an oxide such as barium titanate; and silicone rubber. The thickness of the dielectric is preferably in a range from 0.3 mm to 1.5 mm. When the thickness of the dielectric is equal to or larger than the lower limit value of the aforementioned range, occurrence of insulation breakdown can be prevented. When the thickness of the dielectric is equal to or smaller than the upper limit value of the range, application of high voltage is unnecessary, thereby making it possible to increase the treatment efficiency.

In the corona discharge treatment, the interval between the film to be treated and the electrode is preferably 0.5 mm to 10 mm. When the interval is equal to or larger than the lower limit value of the aforementioned range, even a film having a large thickness can pass through the gap between the electrodes. Consequently, even a film having a thicker portion such as a joint can stably pass through the gap between the electrodes. As a result, the film can be prevented from being damaged. When the interval is equal to or smaller than the upper limit value of the range, applying voltage can be reduced, thereby making it possible to downsize the power source and prevent a streamer discharge.

The output for the corona discharge treatment is preferably set such that damage on the surface to be treated is kept as little as possible. Specifically, the output is preferably 0.02 kW or more, and more preferably 0.04 kW or more, and preferably 5 kW or less, and more preferably 2 kW or less. The preferable corona discharge treatment method is implemented in such a manner that the corona discharge treatment is performed several times with an output as low as possible within this range.

The density of the corona discharge treatment is preferably 1 W·min/m² or more, more preferably 5 W·min/m² or more, and particularly preferably 10 W·min/m² or more, and preferably 1,000 W·min/m² or less, more preferably 500 W·min/m² or less, and particularly preferably 300 W·min/m² or less. When the treatment density is equal to or larger than the lower limit value of the aforementioned range, the polyurethane composition can have good coating property. When the treatment density is equal to or smaller than the upper limit value of the range, deterioration in adhesiveness due to the damage on the treated surface can be prevented.

The frequency of the corona discharge treatment is preferably 5 kHz or more, more preferably 10 kHz or more, preferably 100 kHz or less, and more preferably 50 kHz or less. When the frequency is equal to or higher than the lower limit value of the aforementioned range, uniformity of the corona discharge treatment can be enhanced, thereby making it possible to prevent unevenness of the corona discharge treatment. When the frequency is equal to or lower than the upper limit value of the range, stable corona discharge treatment can be performed.

The corona discharge treatment may be performed by surrounding the electrodes with a casing, introducing an inert gas into the inside of the casing, and feeding the gas to the electrodes. By such a treatment, discharge can be generated in a denser state. Examples of the inert gas may include helium, argon, and nitrogen. As the inert gas, one type thereof may be solely used, and two or more types thereof may be used in combination at any ratio.

Examples of the plasma discharge treatment performed as the hydrophilization surface treatment may include glow discharge treatment and flame plasma treatment. As the glow discharge treatment, any of vacuum glow discharge treatment performed in vacuo and atmospheric pressure glow discharge treatment performed under an atmospheric pressure may be used. Among them, from the viewpoint of productivity, the atmospheric pressure glow discharge treatment performed under an atmospheric pressure is preferable. The atmospheric pressure is in a range from 700 Torr to 780 Torr.

In the glow discharge treatment, a film to be treated is placed between the opposing electrodes, a plasma exciting gas is introduced in an apparatus, and a high frequency voltage is applied between the electrodes so as to cause the gas to be excited to a plasma state, thereby generating the glow discharge between the electrodes. The glow discharge treatment further enhances the hydrophilicity of the treated surface.

The plasma exciting gas is a gas capable of being excited to a plasma state under such conditions. Examples of the plasma exciting gas may include: a noble gas such as argon, helium, neon, krypton, and xenon; nitrogen; carbon dioxide; fluorocarbons such as tetrafluoromethane and mixtures of the fluorocarbons; and a gas obtained by mixing an inert gas such as argon or neon with a reactive gas which can add thereto a polar functional group such as carboxy group, hydroxy group, and carbonyl group. As the plasma exciting gas, one type thereof may be solely used, and two or more types thereof may be used in combination at any ratio.

The frequency of the high frequency voltage in the plasma treatment is preferably in a range from 1 kHz to 100 kHz. The amplitude of the voltage is preferably set to a value in such a range that an electric field intensity when the voltage is applied to the electrodes is 1 kV/cm to 100 kV/cm.

As the saponification treatment performed as the hydrophilization surface treatment, alkali saponification treatment is preferable. Examples of the alkali saponification treatment may include a dipping method and an alkaline solution coating method. From the viewpoint of productivity, the dipping method is preferable.

The dipping method of the saponification treatment is a technique in which a film to be treated is dipped into an alkaline solution under appropriate conditions to perform the saponification treatment on all of the surfaces, which have reactivity with alkali, of the film. The dipping method requires no special equipment, and is thus preferable in terms of cost. The alkaline solution is preferably an aqueous solution of sodium hydroxide. The concentration of the alkaline solution is preferably 0.5 mol/liter or more, more preferably 1 mol/liter or more, preferably 3 mol/liter or less, and more preferably 2 mol/liter or less. The temperature of the alkaline solution is preferably 25°C or more, and more preferably 30°C or more, and preferably 70°C or less, and more preferably 60°C or less. For seting the average water contact angle and the standard deviation of the water contact angle of the treated surface to a value in a desired range, e.g., the dipping time is appropriately adjusted.

After the film is dipped into the alkaline solution, the film is preferably thoroughly washed with water or dipped into a dilute acid so as to neutralize the alkaline component such that no alkaline component remains on the treated film.

When the ultraviolet ray irradiation treatment is performed as the hydrophilization surface treatment, the wavelength of ultraviolet rays is usually 100 nm to 400 nm. The output value of a lamp serving as the light source of ultraviolet rays is usually 120 W or more, preferably 160 W or more, usually 240 W or less, and preferably 200 W or less. The irradiation amount of ultraviolet rays, which is represented by a sum of cumulative light amounts of ultraviolet rays applied to an object irradiated with ultraviolet rays, is preferably 100 mJ/cm² or more, more preferably 200 mJ/cm² or more, and particularly preferably 300 mJ/cm² or more, and preferably 2,000 mJ/cm² or less, more preferably 1,500 mJ/cm² or less, and particularly preferably 1,000 mJ/cm² or less. The sum of cumulative light amount is determined by an irradiation intensity of the ultraviolet irradiation lamp and a line speed (a moving speed of the film). The sum of cumulative light amount may be measured by, e.g., a cumulative ultraviolet irradiation intensity tester (EYEUV METER UVPF-A1 manufactured by Eye Graphic).

### [3.10. Thickness and refractive index of adhesion facilitating layer]

The thickness of the adhesion facilitating layer is preferably 0.005 µm or more, more preferably 0.01 µm or more, and particularly preferably 0.02 µm or more, and preferably 5 µm or less, more preferably 2 µm or less, and particularly preferably 1 µm or less. When the adhesion facilitating layer has a thickness within the range, sufficient adhesive strength between the substrate film and the adhesion facilitating layer can be obtained, and a defect such as a warpage of the multi-layer film of the present invention can be eliminated.

The ratio of the thickness t₁ of the substrate film and the thickness t₂ of the adhesion facilitating layer t₂/t₁ is preferably 0.0003 or more, more preferably 0.0010 or more, and particularly preferably 0.0025 or more, and preferably 0.0100 or less, more preferably 0.0080 or less, and particularly preferably 0.0050 or less. By having such a ratio, transparency of the multi-layer film of the present invention can be increased. When the multi-layer film of the present invention includes only one substrate film, the thickness of the substrate film is t₁, whereas, when the multi-layer film of the present invention includes two or more substrate films, the sum of the thicknesses of the substrate films is t₁. When the multi-layer film of the present invention includes only one adhesion facilitating layer, the thickness of the adhesion facilitating layer is t₂, whereas, when the multi-layer film of the present invention includes two or more adhesion facilitating layers, the sum of the thicknesses of the adhesion facilitating layers is t₂.

It is preferable that the difference in refractive indices at the interface between the substrate film and the adhesion facilitating layer is 0.05 or less. When the difference in refractive indices at the interface within the range, a loss in light when the multi-layer film of the present invention transmits light can be reduced.

### [4. Other layers]

The multi-layer film of the present invention may include an optional layer on the surface at the opposite side to the adhesion facilitating layer of the substrate film. Examples of the optional layer may include an antireflection layer, a hard coat layer, an antistatic layer, an antiglare layer, an antifouling layer, and a separator film.

### [5. Physical properties and size of multi-layer film]

As the multi-layer film of the present invention includes the aforementioned adhesion facilitating layer, the multi-layer film has high adhesive strength with any member. Furthermore, as the multi-layer film of the present invention includes the adhesion facilitating layer, the multi-layer film can retain the adhesive strength for a long period of time even in a high humidity environment. Therefore, the multi-layer film of the present invention can be prevented from delamination from the member to which the multi-layer film is laminated even when the multi-layer film is left in a severe environment such as in transportation or storage for a long period of time.

The total light transmittance of the multi-layer film of the present invention is preferably 80% or more and more preferably 90% or more from the viewpoint of stably exerting the functions as the optical member.

The haze of the multi-layer film of the present invention is preferably 5% or less, more preferably 3% or less, and particularly preferably 2% or less. When the haze is kept at such a low value, clarity of a displayed image on a display device equipped with the multi-layer film of the present invention can be improved.

The multi-layer film of the present invention may be a retardation film having retardation in plane or in the thickness direction. The specific range of the retardation may be set in accordance with the use of the multi-layer film of the present invention. As a specific example of the range, usually, the in-plane retardation Re is appropriately selected in a range from 10 nm to 500 nm while the retardation Rth in the thickness direction is appropriately selected in a range from -500 nm to 500 nm.

The fluctuation of the in-plane retardation Re of the multi-layer film of the present invention is usually within 10 nm, preferably within 5 nm, and more preferably within 2 nm. When the fluctuation of the in-plane retardation Re is within the aforementioned range, good display quality can be achieved when the multi-layer film of the present invention is used as the retardation film of a liquid crystal display device. The fluctuation of the in-plane retardation Re is a difference between the maximum value and the minimum value of the in-plane retardation Re when the in-plane retardation Re is measured in the width direction of a film where a light incident angle is 0° (a state where incident light and the surface of the film are in perpendicular relationship).

The amount of the remaining volatile component in the multi-layer film of the present invention is preferably 0.1% by weight or less, more preferably 0.05% by weight or less, and further preferably 0.02% by weight or less. By confining the amount of the volatile component within the aforementioned range, size stability can be improved, and changes in the in-plane retardation Re and the thickness direction retardation Rth of the multi-layer film of the present invention with the lapse of time can be reduced.

The size in the width direction of the multi-layer film of the present invention may be 1,000 mm to 3,000 mm. The size in the lengthwise direction of the multi-layer film of the present invention is not particularly limited. However, it is preferable that the multi-layer film of the present invention is a long-length film. The "long-length" film means that the length of the film is five or more times longer than the width of the film and preferably ten or more times longer. Specifically, the film has the length of a degree capable of being wound in a roll shape and stored or transported.

### [6. Method for producing multi-layer film]

The multi-layer film of the present invention may be produced by a production method that includes a step of preparing the substrate film and a step of producing the adhesion facilitating layer on the prepared substrate film. The step of producing the adhesion facilitating layer on the substrate film includes the step of forming a film of the urethane composition on the substrate film and the step of curing the film of the urethane composition, as described above.

When the multi-layer film of the present invention includes an optional layer other than the substrate film and the adhesion facilitating layer, a step may be performed in which the optional layer is provided on the surface at the opposite side to the adhesion facilitating layer of the substrate film at any time in the method for producing the multi-layer film.

In addition, at any time in the method for producing the multi-layer film, a step may be performed in which the substrate film, the adhesion facilitating layer, and the multi-layer film are stretched.

### [7. Use of multi-layer film]

The multi-layer film of the present invention is usually used as an optical film. Examples of the optical film for which the multi-layer film is used may include a protection film, a retardation film, and an optical compensation film.

The multi-layer film of the present invention has an advantage of having excellent adhesiveness with any member and having capability of retaining the adhesiveness for a long period of time in a high humidity environment, as described above. From the viewpoint of effectively utilizing the advantage, the multi-layer film of the present invention is preferably used for an application where the multi-layer film is used by being laminated to any member. As a specific example of the use, the multi-layer film of the present invention is preferably used as a polarizing plate protection film.

The polarizing plate usually includes a polarizer and the polarizing plate protection film. Therefore, when the multi-layer film of the present invention is used as the polarizing plate protection film, the multi-layer film of the present invention is laminated to the polarizer on the adhesion facilitating layer side.

The polarizing plate may be produced by, e.g., laminating the adhesion facilitating layer of the multi-layer film of the present invention and the polarizer In the adhering process, the polarizer may be directly laminated to the adhesion facilitating layer without an adhesive agent. Alternatively, the polarizer may be laminated to the adhesion facilitating layer with an adhesive agent layer interposed therebetween. The multi-layer film of the present invention may be laminated to only one side or both sides of the polarizer. When the multi-layer film of the present invention is laminated to only one side of the polarizer, another film having high transparency may be laminated to the other side of the polarizer.

The polarizer may be produced by, e.g., a process wherein iodine or a dichroic dye is absorbed in a polyvinyl alcohol film, and thereafter the obtained film is subjected to uniaxial stretching in a boric acid bath. As another example, the polarizer may be produced by a process wherein iodine or a dichroic dye is absorbed in a polyvinyl alcohol film, the obtained film is then stretched, and a part of the polyvinyl alcohol unit in a molecular chain is modified to a polyvinylene unit. As the polarizer, a polarizer having a function of splitting polarized light into reflected light and transmitted light such as a grid polarizer, a multi-layer polarizer, and a cholesteric liquid crystal polarizer may also be used. Among them, a polarizer containing polyvinyl alcohol is preferable. The polarization degree of the polarizer is preferably 98% or more and more preferably 99% or more. The average thickness of the polarizer is preferably 5 µm to 80 µm.

As the adhesive agent for bonding the polarizer and the multi-layer film of the present invention, an adhesive agent that is optically transparent may be used. Examples of such an adhesive agent may include an aqueous adhesive agent, a solvent type adhesive agent, a two-part curing adhesive agent, a photocurable adhesive agent, and a pressure sensitive adhesive agent. Among them, the aqueous adhesive agent is preferable, and a polyvinyl alcohol-based aqueous adhesive agent is particularly preferable. As the adhesive agent, one type thereof may be solely used, and two or more types thereof may be used in combination at any ratio.

As for the photocurable adhesive agent, an acrylate-based adhesive agent may be used that contains a urethane (meth)acrylate, a hydroxyalkyl (meth)acrylate, or an acrylamide derivative.

The urethane (meth)acrylate may be obtained as, e.g., an oligomer having a radical polymerizable unsaturated group by reacting polyisocyanate with polyol, and thereafter by further reacting therewith a (meth)acrylic compound having a hydroxy group and, if necessary, an allyl ether compound having a hydroxy group The urethane (meth)acrylate may also be obtained by, e.g., reacting a (meth)acrylic compound having a hydroxy group with polyol, and thereafter by further reacting therewith polyisocyanate.

As the urethane (meth)acrylate, ones having two to three double bonds per molecule and a number average molecular weight of 500 to 3,000 per double bond may be preferably used because therewith adhesive strength, flexibility, photocurability, and viscosity can be readily balanced.

The amount of the urethane (meth)acrylate in the photocurable adhesive agent is usually 30% by weight to 50% by weight. When amount of the urethane (meth)acrylate is equal to or larger than the lower limit value of the aforementioned range, the adhesive agent layer can be prevented from becoming brittle. When the amount of the urethane (meth)acrylate is equal to or smaller than the upper limit value of the range, viscosity of the adhesive agent can be reduced and adhesive strength can be enhanced.

Examples of the hydroxyalkyl (meth)acrylate may include hydroxyethyl (meth)acrylate, hydroxypropyl (meth)acrylate, and hydroxybutyl (meth)acrylate. Among them, hydroxyethyl methacrylate is particularly preferable.

The amount of the hydroxyalkyl (meth)acrylate in the photocurable adhesive agent is usually 13% by weight to 40% by weight. When the amount of the hydroxyalkyl (meth)acrylate is equal to or larger than the lower limit value of the aforementioned range, hydrophilicity of the entire adhesive agent can be enhanced, thereby making it possible to enhance the adhesive strength to, particularly, a polyvinyl alcohol-based polarizing film. When the amount of the hydroxyalkyl (meth)acrylate is equal to or smaller than the upper limit value of the range, the adhesive agent layer can be prevented from becoming brittle and photocurability of the adhesive agent can be enhanced.

Example of the acrylamide derivative may include N,N-dimethylacrylamide, N,N-diethylacrylamide, N,N-dimethylaminoethylacrylamide, N,N-dimethylaminopropylacrylamide, N-isopropylacrylamide, N,N-dimethylaminopropylacrylamide, and N-hydroxyethyl acrylamide. Among them, N,N-diethylacrylamide, N-isopropylacrylamide, N,N-dimethylaminopropylacrylamide, and N-hydroxyethylacrylamide are particularly preferable.

The amount of acrylamide in the photocurable adhesive agent is usually 0% by weight to 30% by weight, and preferably 1% by weight to 30% by weight.

It is preferable that the photocurable adhesive agent contains 30% by weight to 40% by weight of isobornyl (meth)acrylate in addition to the aforementioned components. By containing isobornyl (meth)acrylate, the adhesive agent layer has heat resistance, and furthermore, the viscosity can be adjusted so as to improve coating performance without reduction in adhesion performance.

It is preferable that the photocurable adhesive agent contains a photopolymerization initiator. Examples of the photopolymerization initiator may include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethylketal, 1-(4-isopropylphenyl)-2-hydroxy-2-methylpropane-1-one, 2-hydroxy-2-methyl-1-phenylpropane-1-one, thioxanthone, diethylthioxanthone, 2-isopropylthioxanthone, 2-chlorothioxanthone, 2-methyl-1-[4-(methylthio)phenyl]-2-morpholino-propane-1-one, and 2,4,6-trimethylbenzoyldiphenylphosphine oxide. The amount of the photopolymerization initiator in the photocurable adhesive agent is usually 2% by weight to 10% by weight.

The viscosity of the adhesive agent is, at 23°C, usually 20 mPa or more, preferably 30 mPa or more, and more preferably 50 mPa or more, and usually 5,000 mPa or less, preferably 3,000 mPa or less, and more preferably 1,500 mPa or less.

The average thickness of the adhesive agent layer is preferably 0.05 µm or more, and more preferably 0.1 µm or more, and preferably 5 µm or less, and more preferably 1 µm or less.

The method for laminating the multi-layer film and the polarizer is not limited. For example, the following method is preferable: an adhesive agent is applied onto one side of the polarizer if necessary, thereafter the polarizer and the multi-layer film of the present invention are laminated using a roll laminator, and the resulting product is dried or irradiated with light such as ultraviolet rays if necessary.

### [Examples]

The present invention will be specifically described hereinbelow with reference to Examples. However, the present invention is not limited to Examples, and may be implemented with any modification without departing from the scope of claims and equivalents thereto.

Unless otherwise stated, "part" and "%", which represent amounts in the following description are on weight basis. Unless otherwise stated, operations in the following description were performed under a normal temperature and a normal pressure .

### [Explanation of evaluation method]

### [Measurement method of elastic modulus of polyurethane]

The aqueous dispersion of the polyurethane was poured into a glass container such that the thickness is 100 µm after the aqueous dispersion is dried. The aqueous dispersion of the polyurethane was left at a room temperature for 24 hours. After being left at a room temperature, the aqueous dispersion was dried at 50°C for 3 hours and at 120°C for 20 minutes. As a result, a sheet of the polyurethane was obtained.

The obtained sheet of the polyurethane was punched in a dumbbell shape in accordance with JIS K7162. As a result, a test piece was obtained.

The test piece was subjected to a tensile test using a tensile test machine ("pull tester 5564" manufactured by Instron Japan) at a tensile speed of 5 mm/minute. The tensile elastic modulus was measured from a gradient of the obtained SS curve.

### [Initial cutter peel test]

For each of the multi-layer films produced in the respective Examples and Comparative Examples, the surface of the adhesion facilitating layer and one side of the polarizer produced in Preparative Example 2 were laminated using the adhesive solution produced in Preparative Example 3 by a roll laminator. Onto the other side of the polarizer, a protection film (a triacetylcellulose film manufactured by Konica Minolta, product name "KC4UYW", thickness: 40 µm) was laminated using the adhesive solution produced in Preparative Example 3 to produce a polarizing plate.

Then, the surface at the opposite side to the adhesion facilitating layer of the multi-layer film of the polarizing plate and a glass substrate were laminated with an adhesive sheet ("LUCIACS CS9621T" manufactured by Nitto Denko Corporation) interposed therebetween to produce a sample.

Thereafter, the sample was notched by a cutter from the edge and surface thereof. Then, the polarizing plate of the sample was pulled as an attempt to delaminate the polarizing plate.

As a result, when delamination occurred between the multi-layer film and the glass substrate, the adhesion facilitating layer and the adhesive solution had sufficient adhesive strength, and thus the result of the initial cutter peel test was evaluated as "good". When delamination occurred between the polarizer and the multi-layer film, the adhesive strength was insufficient, and thus the result of the initial cutter peel test was evaluated as "defective".

### [Cutter peel test after humidity and heat]

In the same manner as the aforementioned procedure (initial cutter peel test), the samples each having the glass substrate, the multi-layer film, the polarizer, and the protection film in this order were prepared.

Some of the samples were placed in a constant-temperature constant-humidity chamber at 60°C and at 90% RH. Some of the samples were taken out from the constant-temperature constant-humidity chamber every certain time and an attempt for delamination of the substrate film was performed in the same manner as the aforementioned procedure (initial cutter peel test).

The result of the cutter peel test after humidity and heat was evaluated as "excellent" when no delamination occurred between the polarizer and the multi-layer film and delamination occurred between the multi-layer film and the glass substrate after the lapse of 500 hours from the onset of the placement in the constant-humidity constant-temperature chamber.

The result of the cutter peel test after humidity and heat was evaluated as "good" when no delamination occurred between the polarizer and the multi-layer film and delamination occurred between the multi-layer film and the glass substrate during 200 to 500 hours from the onset of the placement in the constant-humidity constant-temperature chamber.

The result of the cutter peel test after humidity and heat was evaluated as "defective" when delamination occurred between the polarizer and the multi-layer film before the lapse of 200 hours from the onset of the placement in the constant-humidity constant-temperature chamber.

[Preparative Example 1: Production of substrate film]

Pellets of an alicyclic structure containing polymer resin ("ZEONOR 1430" manufactured by ZEON Corporation, glass transition temperature: 135°C) were dried at 70°C for 2 hours using a hot air dryer with air ventilation. Thereafter, a film having a thickness of 100 µm and a length of 1,000 m was produced using a T-die film melt extrusion molding machine equipped with a resin melting mixer with a screw having a diameter of 65 mm under molding conditions of a resin melting temperature of 270°C and a width of the T-die of 500 mm. This film is the substrate film made of the alicyclic structure containing polymer resin.

### [Preparative Example 2: Production of polarizer]

A polyvinyl alcohol film having a thickness of 80 µm was dyed in a 0.3% iodine aqueous solution. Thereafter, the dyed polyvinyl alcohol film was stretched to five times the original size in a 4% boric acid aqueous solution and a 2% potassium iodide aqueous solution. Thereafter, the stretched film was dried at 50°C for 4 minutes. As a result, a polarizer was produced.

### [Preparative Example 3: Production of adhesive solution]

To polyvinyl alcohol containing an acetoacetyl group ("GOHSEFIMER Z410 manufactured by Nippon Synthetic Chemical Industry), water was added so as to dilute to solid content concentration of 3%. As a result, an adhesive solution was produced.

### [Example 1]

### (1-1. Production of resin composition)

A liquid resin composition 1 having a solid content concentration of 2% was obtained by mixing 100 parts in terms of polyurethane amount of an aqueous dispersion of a polyether-based polyurethane ("Superflex 870" manufactured by Daiichi Kogyo Seiyaku), 15 parts of an epoxy compound ("Denacol EX 313" manufactured by Nagase ChemteX Corporation) serving as a crosslinking agent, 2 parts of adipic acid dihydrazide serving as a nonvolatile base, 8 parts in terms of silica particle amount of an aqueous dispersion of silica particles ("Snowtex MP 1040" manufactured by Nissan Chemical Industries; average particle diameter 120 nm) serving as lubricant, 8 parts in terms of silica particle amount of an aqueous dispersion of silica particles ("Snowtex XL" manufactured by Nissan Chemical Industries; average particle diameter 50 nm) serving as lubricant, 0.5% by weight with respect to total solid content of an acetylene-based surfactant ("Surfynol 440" manufactured by Air Products and Chemicals) serving as the wetting agent, and water.

### (1-2. Production of multi-layer film)

Discharge treatment was performed on the surface of the substrate film obtained in Preparative Example 1 using a corona treatment device (manufactured by Kasuga Denki) under conditions of an output power of 300 W, an electrode length of 240 mm, a work-electrode interval of 3.0 mm, and a conveyance speed of 4 m/min.

The surface on which the discharge treatment had been performed of the substrate film was coated with the liquid resin composition 1 using a roll coater such that the thickness after drying is 0.1 µm. Thereafter, the resulting product was heated at 130°C for 60 seconds to form an adhesion facilitating layer on the substrate film. As a result, a multi-layer film including the substrate film and the adhesion facilitating layer was obtained.

The multi-layer film was subjected to the initial cutter peel test and the cutter peel test after humidity and heat in the aforementioned manner.

### [Example 2]

In step (1-1), a carbodiimide compound ("CARBODILITE V-02" manufactured by Nisshinbo Chemical) was used as the crosslinking agent in place of the epoxy compound.

A multi-layer film was produced and evaluated in the same manner as in Example 1 except for the aforementioned modification.

### [Example 3]

In step (1-1), an oxazoline compound ("Epocros WS 700" manufactured by Nippon Shokubai) was used as the crosslinking agent in place of the epoxy compound.

A multi-layer film was produced and evaluated in the same manner as Example 1 except for the aforementioned modification.

### [Example 4]

In step (1-1), the type of the aqueous dispersion of the polyether-based polyurethane was changed to "Superflex 130" manufactured by Daiichi Kogyo Seiyaku.

A multi-layer film was produced and evaluated in the same manner as Example 1 except for the aforementioned modification.

### [Example 5]

In step (1-1), the type of the aqueous dispersion of the polyether-based polyurethane was changed to "Superflex 130" manufactured by Daiichi Kogyo Seiyaku.

Also in step (1-1), a carbodiimide compound ("CARBODILITE V-02" manufactured by Nisshinbo Chemical) was used as the crosslinking agent in place of the epoxy compound.

A multi-layer film was produced and evaluated in the same manner as Example 1 except for the aforementioned modification.

### [Example 6]

In step (1-1), the type of the aqueous dispersion of the polyether-based polyurethane was changed to "Superflex 130" manufactured by Daiichi Kogyo Seiyaku.

In step (1-1), an oxazoline compound ("Epocross WS 700" manufactured by Nippon Shokubai) was used as the crosslinking agent in place of the epoxy compound.

A multi-layer film was produced and evaluated in the same manner as Example 1 except for the aforementioned modification.

### [Comparative Example 1]

In step (1-1), an aqueous dispersion of a polyether ester-based polyurethane ("Superflex 150HS" manufactured by Daiichi Kogyo Seiyaku) was used in place of the aqueous dispersion of the polyether-based polyurethane. A polyether ester-based polyurethane is a polyurethane that is produced using a polyether ester polyol as the component (i) of monomers used for producing the polyurethane.

Also in step (1-1), the epoxy compound serving as the crosslinking agent was not used.

A multi-layer film was produced and evaluated in the same manner as Example 1 except for the aforementioned modification.

### [Comparative Example 2]

In step (1-1), the epoxy compound serving as the crosslinking agent and adipic acid dihydrazide serving as the nonvolatile base were not used.

A multi-layer film was produced and evaluated in the same manner as Example 1 except for the aforementioned modification.

### [Results]

The results of Examples and Comparative Examples are summarized in the following tables. In the following tables, "ADH" represents adipic acid dihydrazide.

**[Table 1. Results of Examples]**

| | | Ex. 1 | Ex. 2 | Ex. 3 | Ex. 4 | Ex. 5 | Ex. 6 |
|---|---|---|---|---|---|---|---|
| Polyurethane | Product number | Super flex 870 | Super flex 870 | Super flex 870 | Super flex 130 | Super flex 130 | Super flex 130 |
| | Skeleton | Poly ether | Poly ether | Poly ether | Poly ether | Poly ether | Poly ether |
| | Tensile elastic modulus [N/mm²] | 1486 | 1486 | 1486 | 1612 | 1612 | 1612 |
| Crosslinking agent | Type | Epoxy | Carbodii mide | Oxazolin e | Epoxy | Carbodii mide | Oxazolin e |
| | Product name | Denacol EX313 | Carbodil ite V-02 | Epocross WS700 | Denacol EX313 | Carbodil ite V-02 | Epocross WS700 |
| Nonvolatile | base | ADH | ADH | ADH | ADH | ADH | ADH |
| Cutter peel | Initial | Good | Good | Good | Good | Good | Good |
| | After humidity and heat | Excellent | Good | Good | Excellent | Good | Good |

**[Table 2. Results of Comparative Examples]**

| | | Comp. Ex. 1 | Comp. Ex. 2 |
|---|---|---|---|
| Polyurethane | Product number | Superflex 150HS | Superflex 870 |
| | Skeleton | Polyether ester | Polyether |
| | Tensile elastic modulus [N/mm²] | 798 | 1486 |
| Crosslinking agent | Type | - | - |
| | Product name | - | - |
| Nonvolatile | base | ADH | None |
| Cutter peel | Initial | Defective | Defective |
| | After humidity and heat | Defective | Defective |

### [Discussion]

As can be understood from the tables, good results of the initial cutter peel test were obtained in all of Examples. It is thus found that the adhesion facilitating layer of the multi-layer film of the present invention has high adhesiveness before being left in a high humidity environment.

Further, good results of the cutter peel test after humidity and heat were also obtained in all of Examples. It is thus found that the multi-layer film of the present invention has excellent durability in a high humidity environment and can retain high adhesiveness for a long period of time even when being left in a high humidity environment.

## Claims

1. A multi-layer film, comprising:
a substrate film; and
an adhesion facilitating layer provided on the substrate film, wherein
the adhesion facilitating layer is a cured product of a composition that contains a polyether-based polyurethane, a crosslinking agent capable of crosslinking the polyether-based polyurethane, and a nonvolatile base, and
the polyether-based polyurethane has a tensile elastic modulus of equal to or larger than 1,000 N/mm² and equal to or smaller than 5,000 N/mm².

2. The multi-layer film according to claim 1, wherein the substrate film includes a layer made of a resin containing a polymer having an alicyclic structure.

3. The multi-layer film according to claim 1 or 2, wherein the crosslinking agent contains an epoxy compound.

4. The multi-layer film according to any one of claims 1 to 3, wherein the composition contains particles.

5. The multi-layer film according to any one of claims 1 to 4, wherein the composition contains a wetting agent.

6. A method for producing a multi-layer film, the method comprising:
forming on a substrate film a film of a composition that contains a polyether-based polyurethane, a crosslinking agent capable of crosslinking the polyether-based polyurethane, and a nonvolatile base; and
curing the film of the composition, wherein
the polyether-based polyurethane has a tensile elastic modulus of equal to or larger than 1,000 N/mm² and equal to or smaller than 5,000 N/mm².

## Patentansprüche

1. Eine Mehrschichtfolie, umfassend:
eine Substratfolie; und
eine adhäsionsermöglichende Schicht bereitgestellt auf der Substratfolie, wobei
die adhäsionsermöglichende Schicht ein ausgehärtetes Produkt einer Zusammensetzung ist, welche ein Polyether-basiertes Polyurethan, ein Vernetzungsmittel, welches in der Lage ist das Polyether-basierte Polyurethan zu vernetzen, und eine nichtflüchtige Base enthält, und
das Polyether-basierte Polyurethan ein Zugelastizitätsmodul von gleich oder größer als 1000 N/mm² und gleich oder kleiner als 5000 N/mm² aufweist.

2. Die Mehrschichtfolie gemäß Anspruch 1, wobei die Substratefolie eine Schicht umfasst, die ein Harz enthaltend ein Polymer mit einer alizyklischen Struktur umfasst.

3. Die Mehrschichtfolie gemäß Anspruch 1 oder 2, wobei das Vernetzungsmittel eine Epoxyverbindung enthält.

4. Die Mehrschichtfolie gemäß einem der Ansprüche 1 bis 3, wobei die Zusammensetzung Teilchen enthält.

5. Die Mehrschichtfolie gemäß einem der Ansprüche 1 bis 4, wobei die Zusammensetzung ein Benetzungsmittel enthält.

6. Ein Verfahren zur Herstellung einer Mehrschichtfolie, das Verfahren umfassend:
Bilden auf einer Substratfolie eines Films aus einer Zusammensetzung, die ein Polyether-basiertes Polyurethan, ein Vernetzungsmittel, welches in der Lage ist das Polyether-basierte Polyurethan zu vernetzen, und eine nichtflüchtige Base enthält; und
Aushärten des Films der Zusammensetzung, wobei
das Polyether-basierte Polyurethan ein Zugelastizitätsmodul von gleich oder größer als 1000 N/mm² und gleich oder kleiner als 5,000 N/mm² aufweist.

## Revendications

1. Film multicouche, comprenant :
un film de substrat ; et
une couche de facilitation d'adhérence disposée sur le film de substrat, dans lequel :
la couche de facilitation d'adhérence est un produit durci d'une composition qui contient un polyuréthane à base de polyéther, un agent réticulant apte à réticuler le polyuréthane à base de polyéther, et une base non volatile, et
le polyuréthane à base de polyéther a un module d'élasticité en traction supérieur ou égal à 1000 N/mm² et inférieur ou égal à 5000 N/mm².

2. Film multicouche selon la revendication 1, dans lequel le film de substrat comprend une couche constituée par une résine contenant un polymère ayant une structure alicyclique.

3. Film multicouche selon la revendication 1 ou 2, dans lequel l'agent réticulant contient un composé époxy.

4. Film multicouche selon l'une quelconque des revendications 1 à 3, dans lequel la composition contient des particules.

5. Film multicouche selon l'une quelconque des revendications 1 à 4, dans lequel la composition contient un agent mouillant.

6. Procédé pour produire un film multicouche, le procédé comprenant :
la formation sur un film de substrat d'un film d'une composition qui contient un polyuréthane à base de polyéther, un agent réticulant apte à réticuler le polyuréthane à base de polyéther, et une base non volatile ; et
le durcissement du film de la composition, dans lequel :
le polyuréthane à base de polyéther a un module d'élasticité en traction supérieur ou égal à 1000 N/mm² et inférieur ou égal à 5000 N/mm².
